# EUROPÄISCHE PATENTSCHRIFT

(11) **EP 2 297 452 B1**
(45) Veröffentlichungstag und Bekanntmachung des Hinweises auf die Patenterteilung: **01.03.2017**
(21) Anmeldenummer: 09737806.1
(22) Anmeldetag: 09.04.2009
(51) Int. Cl.: F03B 13/16, F03B 15/00

(54) **WANDLER UND VERFAHREN ZUM WANDELN VON MECHANISCHER ENERGIE IN ELEKTRISCHE ENERGIE**
CONVERTER AND METHOD FOR CONVERTING MECHANICAL ENERGY INTO ELECTRIC ENERGY
CONVERTISSEUR ET PROCÉDÉ DE CONVERSION D'ÉNERGIE MÉCANIQUE EN ÉNERGIE ÉLECTRIQUE

(30) Priorität: 28.04.2008 DE 102008021111
(43) Veröffentlichungstag der Anmeldung: 23.03.2011
(73) Patentinhaber: Robert Bosch GmbH, 70469 Stuttgart (DE)
(72) Erfinder: SCHARMANN, Nik, 97082 Würzburg (DE); WIRZBERGER, Franz, 97843 Neuhütten (DE); VATH, Andreas, 63849 Leidersbach (DE); ZIMMERMANN, Stefan, 97753 Karlstadt (DE)
(74) Vertreter: Thürer, Andreas
(86) Internationale Anmeldenummer: PCT/EP2009/002683
(87) Internationale Veröffentlichungsnummer: WO 2009/132762

(56) Entgegenhaltungen:
- WO-A1-2009/003598
- US-A- 4 258 270
- US-A1- 2002 047 273
- US-A1- 2007 261 404

## Beschreibung

Die Erfindung betrifft einen hydraulisch/elektrischen Wandler gemäß dem Oberbegriff des Patentanspruches 1 und ein Verfahren zum Wandeln von mechanischer Energie in elektrische Energie mittels eines Wandlers gemäß dem Oberbegriff des nebengeordneten Patentanspruches 9.

Die US 4,258,270 offenbart einen hydraulisch / elektrischen Wandler mit einer von einer oszillierenden Naturkraft angetriebenen Pumpe. Über diese ist eine Hydromaschinenanordnung antreibbar. Die Hydromaschinenanordnung ist mit einer elektrischen Maschine zur Umwandlung der hydraulischen Energie in elektrische Energie gekoppelt. Die Hydromaschinenanordnung ist über einen Regelkreis in Abhängigkeit von Bewegungsparametern der Naturkraft ansteuerbar.

Hydraulisch/elektrische Wandler werden beispielsweise bei Wellengeneratoren eingesetzt, wie sie in der US 6,300,698 B1 beschrieben sind. Der bekannte Wellengenerator hat einen Hydrozylinder, der mit einer Boje in Wirkverbindung steht, so dass der Hydrozylinder durch den Wellengang und die entsprechende Bewegung der Boje betätigt und Druckmittel in einen Hydraulikkreis gefördert wird. Dem Hydrozylinder ist ein hydraulischer Gleichrichter zugeordnet, so dass unabhängig von der Bewegungsrichtung des Hydrozylinders Druckmittel in den Hydraulikkreis gefördert wird, um einen dem hydraulischen Gleichrichter nachgeschalteten Hydrospeicher aufzuladen und einen Konstantmotor anzutreiben. Die Abtriebswelle dieses Konstantmotors ist mit einem Generator verbunden, so dass die hydraulische Energie im vorbeschriebenen Hydraulikkreis in elektrische Energie umgewandelt wird. Da der Wellengang sowohl hinsichtlich der Wellenhöhe als auch der Frequenz stark variiert, muss eine aufwendige elektronische Schaltung zur Vergleichmäßigung der Generator-Ausgangsspannung vorgesehen werden.

In der nachveröffentlichten Patentanmeldung 10 2007 018 600 der Anmelderin ist ein Wandler mit einer vom Wellengang angetriebenen Pumpe offenbart, über die ein Hydrospeicher aufladbar und ein Hydromotor antreibbar ist, der seinerseits einen Generator antreibt. Der Hydromotor ist bei dieser Lösung an ein Drucknetz angeschlossen und drehzahlgeregelt ausgeführt, so dass der Generator durch Verstellen des Schwenkwinkels des Hydromotors in Abhängigkeit von hydraulikseitigen Druckschwankungen in weitem Umfang mit einer vorgegebenen Drehzahl angetrieben werden kann. Derartige Systeme mit einem an einem Drucknetz betriebenen drehzahlgeregelten Verstellmotor werden auch als Sekundärregelung bezeichnet, wobei die Drehzahl des Verstellmotors so geregelt ist, dass sie unabhängig vom jeweiligen Lastdruck bei dem im Drucknetz anliegenden Druck erreicht wird. Dieser Druck ist im Wesentlichen vom Ladezustand des Hydrospeichers abhängig. Dabei muss das Schluckvolumen des Hydromotors solange verändert werden, bis ein Gleichgewicht des Motordrehmoments mit der Last besteht und gleichzeitig die Solldrehzahl erreicht ist.

Durch diese Art der Drehzahlregelung ist ein erheblicher vorrichtungs- und regelungstechnischer Aufwand für den Wandler erforderlich.

In der ebenfalls nachveröffentlichten Patentanmeldung DE 2007 056 400 der Anmelderin ist ein Regelungskonzept erläutert, gemäß dem der Wandler mit einem Regelkreis ausgeführt ist, über den die verstellbare Hydromaschine derart verstellbar ist, dass der Kolben der Kolbenpumpe mit einer vorbestimmten Kraft oder einer vorbestimmten Druckdifferenz beaufschlagt ist. Diese Druck- oder Kraftregelung erfolgt derart, dass bei der eingeregelten Kraft bzw. dem eingeregelten Druck eine optimale Umsetzung der von der Naturkraft (Wellengang) eingetragenen Energie in hydraulische Energie gewährleistet ist. Dementsprechend ist der eingeregelte Druck oder die eingeregelte Kraft in Abhängigkeit von den Oszillationsparametern der Naturkraft (Wellengang) veränderlich. Die Erfindung löst sich somit von den eingangs beschriebenen Konzepten, bei denen die Generatordrehzahl mit vergleichsweise großem Aufwand geregelt wurde und zielt praktisch darauf ab, dass die Pumpe, beispielsweise die Kraft-Hub-Kennlinie einer Kolbenpumpe in Abhängigkeit von den Oszillationsparametern im Hinblick auf eine optimale Wandlung der mechanischen Energie in hydraulische Energie eingestellt ist.

Diese Lösung ermöglicht zwar eine Druck- bzw. Kraftregelung des Systems mit äußerst geringem Aufwand. Es zeigte sich jedoch, dass die abgegriffene elektrische Leistung immer noch mit erheblichen Schwankungen behaftet ist.

Demgegenüber liegt der Erfindung die Aufgabe zugrunde, einen Wandler und ein Verfahren zu schaffen, über die mit geringem vorrichtungstechnischen Aufwand eine oszillierende Naturkraft, beispielsweise Wellengang ausgenutzt werden kann, um eine mit möglichst geringen Schwankungen behaftete elektrische Leistung bereit zu stellen.

Diese Aufgabe wird hinsichtlich des Wandlers durch die Merkmalskombination des Patentanspruches 1 und hinsichtlich des Verfahrens durch die Merkmale des nebengeordneten Patentanspruches 9 gelöst.

Erfindungsgemäß ist der Wandler mit einer von einer oszillierenden Naturkraft angetriebenen Pumpe ausgeführt, über die eine Hydromaschinenanordnung angetrieben wird. Diese ist wiederum mit einer elektrischen Maschine zur Umwandlung der hydraulischen Energie in elektrische Energie gekoppelt, wobei zumindest eine Hydromaschine der Hydromaschinenanordnung verstellbar ausgeführt ist und über einen Regelkreis in Abhängigkeit von den Bewegungsparametern der Pumpe oder der Naturkraft ansteuerbar ist. Die Hydromaschinenanordnung und die elektrische Maschine sind einem gemeinsamen Antriebsstrang zugeordnet, wobei die elektrische Maschine über eine Regeleinrichtung derart ansteuerbar ist, dass der Antriebsstrang je nach Belastungszustand abgebremst oder beschleunigt wird.

Bei diesem neuen Regelkonzept wird die abgegriffene Leistung durch Eingriff in den hydraulischen Teil - Verstellung der Hydromaschine zur Kraft- / Druckbeaufschlagung der Pumpe - und in den elektrischen Teil - Ansteuerung der elektrischen Maschine derart, dass der Antriebsstrang in Abhängigkeit von der Belastung abgebremst oder beschleunigt wird - geglättet, so dass der Wandler gegenüber herkömmlichen Lösungen mit einem verbesserten Wirkungsgrad betrieben werden kann. Der erfindungsgemäße Wandler und das erfindungsgemäße Verfahren ermöglichen somit eine Kraft- / Druckregelung im hydraulischen Teil (Pumpe / Hydromaschine), in die auch die Drehzahl des Antriebsstrangs eingeht. Entsprechend erfolgt die Regelung der elektrischen Maschine in Abhängigkeit vom Sollwert der Regelung des hydraulischen Teils des Wandlers. Sowohl bei der Verstellung der Hydromaschine als auch bei der Verstellung der elektrischen Maschine gehen die Drehzahl und - mittelbar oder unmittelbar - die auf die Pumpe wirkende Kraft bzw. deren Bewegungszustand ein.

Bei einem bevorzugten Ausführungsbeispiel der Erfindung ist der Antriebsstrang mit einer Schwungmasse ausgeführt, durch die das Gesamt- Massenträgheitsmoment des Antriebsstrangs erhöht wird, so dass durch das Abbremsen und Beschleunigen der Schwungmasse bereits eine Glättung erfolgt. Über das erfindungsgemäße Konzept kann dann je nach Leistungseintrag von Seiten des hydraulischen Teils in den Antriebsstrang über den Generator die Schwungmasse abgebremst oder beschleunigt werden, um die Drehzahl und somit die abgegriffene Leistung des Systems zu glätten.

Erfindungsgemäß wird es bevorzugt, wenn diese Schwungmasse ein Vielfaches des Trägheitsmoments der sonstigen, zum Antriebsstrang gehörenden rotierenden Massen beträgt. Dabei wird es besonders bevorzugt, wenn das Trägheitsmoment der Schwungmasse das 10-fache des Trägheitsmomentes der sonstigen rotierenden Massen beträgt.

Der Schwenkwinkel der Hydromaschinenanordnung ist in Abhängigkeit von der auf die Pumpe wirkenden Kraft und von der Drehzahl der Schwungmasse einstellbar.

Bei einer besonders bevorzugten Lösung ist die Hydromaschinenanordnung mit zwei Hydromaschinen unterschiedlicher Nenngrößen ausgeführt, die jeweils verstellbar sind. Eine derartige Lösung ermöglicht es, den Wandler aufgrund der geringen Abmessungen der kleineren Hydromaschinen sehr kompakt auszuführen, wobei derartige kleine Hydromaschinen auch im Ansprechverhalten im Hinblick auf die vorliegende Regelaufgabe optimiert sind, da eine schnellere Verstellung und eine entsprechende Drehmomentänderung ermöglicht wird.

Die elektrische Maschine ist vorzugsweise als Asynchronmaschine ausgeführt, wobei die Regelung dieser Asynchronmaschine vorzugsweise - jedoch nicht notwendigerweise - über einen Frequenzumrichter erfolgt.

Die Ansteuerung dieser Asynchronmaschine erfolgt vorzugsweise leistungsgeregelt, wobei in den Leistungssollwert die Drehzahl und das an der Asynchronmaschine anfallende Drehmoment oder die über den mechanisch/hydraulischen Wandler in den Antriebsstrang eingeleitete Leistung eingehen.

Anstelle einer Leistungsregelung der elektrischen Maschine kann auch eine Drehzahlregelung oder dergleichen vorgesehen sein.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 ein Schaltschema eines erfindungsgemäßen hydraulisch/elektrischen Wandlers (Wellengenerator),
Figur 2 eine Speisespüleinheit sowie eine Druckabsicherung des Wandlers aus Figur 1;
Figur 3 einen Steuerkreis einer Regeleinheit des Wandlers aus Figur 1 und
Figur 4 ein Diagramm, das die in einen Verbindungsstrang eingeleitete mechanische Leistung und die abgegriffene elektrische Leistung zeigt.

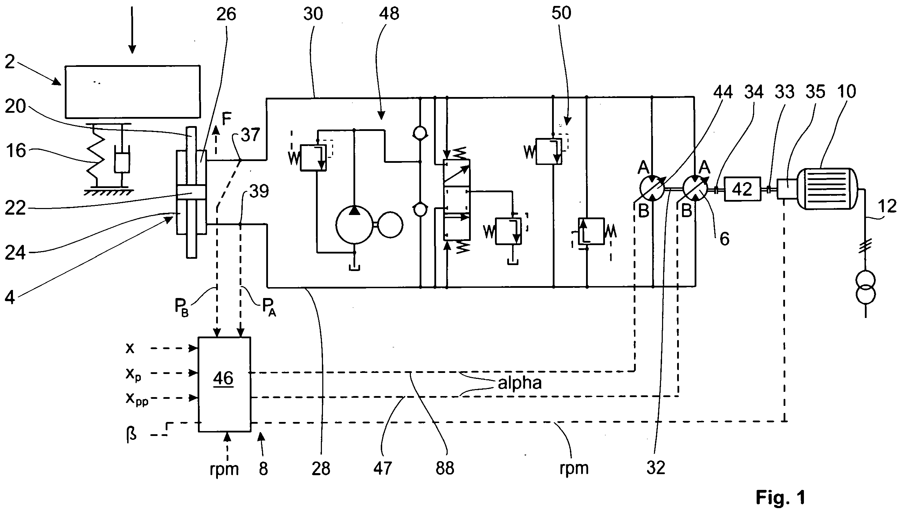

Bei dem im Folgenden beschriebenen Ausführungsbeispiel ist der hydraulisch/elektrische Wandler als Wellengenerator 1 ausgeführt, über den im Wellengang gespeicherte Energie in hydraulische Energie und dann in elektrische Energie wandelbar ist. Dieser Wellengenerator 1 besteht im Wesentlichen aus einem Schwimmkörper 2, dessen durch den Wellengang verursachte oszillierende Bewegung auf eine Kolbenpumpe übertragen wird, die beim dargestellten Ausführungsbeispiel als Gleichgangzylinder (Plungerpumpe) 4 ausgeführt ist. Dieser ist über einen geschlossenen hydraulischen Kreislauf mit einer Hydromaschinenanordnung mit zwei verstellbaren Hydromaschinen 6, 44 verbunden, deren Schwenkwinkel zur Veränderung des Förder-/Schluckvolumens verstellbar ist. Diese Hydromaschinen 6, 44 können beispielsweise in Axialkolbenbauweise ausgeführt sein. Der Schwenkwinkel der Hydromaschinen 6, 44 wird über einen Regelkreis 8 verstellt, über den die auf den Gleichgangzylinder 4 wirkende Kraft eingeregelt wird. Die Hydromaschinen 6, 44 sind mit einer elektrischen Maschine kraftgekoppelt, die im Folgenden als Generator 10 bezeichnet wird. Dieser wird in der Regel von der Hydromaschine 6 angetrieben, so dass die generierte elektrische Energie in ein in Figur 1 mit dem Bezugszeichen 12 angedeutetes Netz eingespeist werden kann.

Als Schwimmkörper 2 kann beispielsweise eine Konstruktion verwendet werden, wie sie von der Firma Archimedes Wave Swing, Ltd. Entwickelt wurde. Ein derartiger Schwimmkörper 2 ist am Meeresboden 18 verankert und vollständig unter Wasser angeordnet, wobei eine Schwingmasse 14 über den Wellengang von einer Kraft FW beaufschlagt wird, wobei diese Kraft entsprechend dem Wellengang unregelmäßig sowohl in der Amplitude als auch in der Frequenz oszilliert. Derartige Kraft-Zeitverläufe lassen sich über geeignete Modellrechnungen praktisch für jedes Wellenklima näherungsweise oder idealisiert berechnen. Die FT-Profile werden dann in einem Datenspeicher abgelegt und bei der im Folgenden beschriebenen Regelung berücksichtigt.

Wie des Weiteren der schematischen Darstellung in Figur 1 entnehmbar ist, wird die Auf- und Abbewegung des Schwimmkörpers 14 über ein Feder-/Dämpfungssystem 16 geführt, so dass hochfrequente Schwankungen oder übermäßige Beschleunigungen unterdrückt oder verringert werden. Hinsichtlich weiterer Einzelheiten zum Aufbau derartiger Schwimmkörper 2 sei auf die Domain der Firma AWS Ocean Energy (www.awsocean.com) verwiesen, so dass weitere Ausführungen entbehrlich sind.

Die Schwingmasse 14 des Schwimmkörpers 2 wirkt auf eine Kolbenstange 20 eines Kolbens 22 des Gleichgangzylinders 4, so dass dieser der Vertikalbewegung der Schwingmasse 14 folgt. Der Kolben 22 unterteilt den Gleichgangzylinder 4 in zwei Ringräume 24, 26, die über Druckleitungen 28 bzw. 30 mit Anschlüssen A bzw. B der Hydromaschinen 6, 44 verbunden sind. Diese können im Vierquadrantenbetrieb laufen, so dass sowohl Drehrichtung als auch Momentenrichtung umkehrbar sind. Die Hydromaschinen 6, 44 können demnach sowohl als Hydropumpe als auch als Hydromaschine mit wechselnder Drehrichtung betrieben werden. In einem Verbindungsstrang 32 zwischen den Hydromaschinen 6, 44 und dem Generator 10 ist eine Kupplung 34 angeordnet, so dass die Kraftkopplung im Fall einer Störung im Netz 12 oder im Wandlerbereich getrennt werden kann. Diese Kupplung 34 ist üblicherweise mit Federungs- und Dämpfungswirkung ausgeführt, so dass schlagartige Drehmomentschwankungen vergleichmäßigbar sind.

Zwischen dem Generator 10 und der Kupplung 34 ist beim dargestellten Ausführungsbeispiel eine Schwungmasse 42 vorgesehen, deren Massenträgheitsmoment wesentlich größer als dasjenige der sonstige Bauelemente des Antriebsstrangs 33 (Hydromaschinen 6, 44, Generator 10, Kupplung 34, etc.) ist. Beim dargestellten Ausführungsbeispiel beträgt das Massenträgheitsmoment der Schwungmasse 42 etwa das 10-fache der sonstigen Bauelemente.

Zwischen der Schwungmasse 42 und dem Generator 10 ist noch eine weitere Kupplung 34 angeordnet.

Der Generator 10 ist bei der dargestellten Lösung als Asynchrongenerator ausgeführt, der einen gewissen Schlupf zulässt. Der Generator 10 ist mit einem Frequenzumrichter 35 ausgeführt, der ebenfalls über die Regeleinheit 46 angesteuert wird. Bei einem bevorzugten Ausführungsbeispiel erfolgt die Ansteuerung des Frequenzumrichters 35 nach einer Leistungsregelung, die ihren Sollwert (LeistungsSollwert) aus dem Regelalgorithmus zur Ansteuerung der Hydromaschinen 6, 44 erhält. Wie im Folgenden noch näher erläutert wird, werden die beiden Hydromaschinen 6, 44 vorzugsweise nach einer Kraftregelung angesteuert, wobei der Regelalgorithmus bei der Berechnung/Vorgabe der Schwenkwinkel Alpha die Drehzahl des Antriebsstrangs 32 berücksichtigt, die wiederum über den frequenzumrichtergesteuerten Generator 10 eingestellt wird. Die Hydromaschinen 6, 44 übertragen die über die Wellen (Naturkraft) eingetragene Eingangsleistung in Form des Produktes aus der Kraft K und der linearen Geschwindigkeit xₚ des Kolbens 22 auf den Antriebsstrang 22 in Form des Produktes aus dem über die Hydromaschinen 6, 44 aufgebrachten Drehmomentes und der Winkelgeschwindigkeit des Antriebsstrangs 32, die sich wiederum direkt aus der Drehzahl rpm ergibt.

In diesem Bereich des mechanischen/hydraulischen Wandlers tritt keine Glättung der durch das Wellenklima vorgegebenen Unregelmäßigkeiten auf - diese Glättung erfolgt erfindungsgemäß durch Ansteuerung des Frequenzumrichters 35 und damit des Generators 10. Die Leistungsglättung und die damit verbundene Effizienzsteigerung wird ermöglicht durch die gezielte Veränderung der Drehzahl des Antriebsstrangs 32 und besonders unterstützt durch das zusätzliche Massenträgheitsmoment der Schwungmasse 42. So wird beispielsweise bei Durchfahrung eines Leistungsanstiegs (Beschleunigung des Schwimmkörpers 2) wird die Schwungmasse 42 beschleunigt und somit kinetische Energie im System gespeichert. Durch geeignete Ansteuerung des Frequenzumrichters 35 wird jedoch die Schwungmasse 42 - oder genauer gesagt der gesamte Antriebsstrang 32 - abgebremst, so dass der Generator 10 weniger Leistung abgibt, als ihm eigentlich von der Hydraulikseite aus angeboten wird.

In entsprechender Weise wird beim Durchfahren eines Leistungsabfalls (Bewegen der Schwungmasse 2 zu einem Umkehrpunkt) die Gesamtträgheit, d.h. die Schwungmasse 42 und die sonstigen Bauelemente des Antriebsstrangs 32 abgebremst - der Frequenzumrichter 35 des Generators 10 wird jedoch dann so angesteuert, dass dieser bei einer herkömmlichen Anlage zu vernichtende kinetische Energie in elektrische Energie umsetzt, so dass der Generator 10 mehr Leistung abgibt, als ihm eigentlich vom hydraulischen Teil des Wandlers 1 zur Verfügung gestellt wird.

Die Ansteuerung des Asynchrongenerators 10 erfolgt dabei im Wesentlichen nach einer Leistungsregelung, wobei in diese das am Generator 10 anliegende Drehmoment und die Drehzahl eingehen. Aus diesen Istwerten wird ein Sollwert für den Leistungsregler ermittelt, wobei dieser Sollwert einem gleitenden Mittelwertbildner unterzogen und als Sollwert übergeben wird. Dieser Sollwert führt dann letztendlich zu der Drehzahlerhöhung oder -Verlängerung, die zur Erreichung des gewünschten Leistungssollwertes benötigt wird.

Anstelle der zusätzlichen Messung des Drehmoments zur Ermittlung der am Generator 10 ankommenden Leistung könnte man auch die Leistung im Bereich des mechanischen/hydraulischen Wandlers, d.h. im Leistungsübertragungsweg von der Pumpe 4 zu den Hydromaschinen 6, 44 berücksichtigen. Diese Art der Leistungsermittlung ist jedoch noch nicht in der gewünschten Weise erprobt, so dass die vorbeschriebene Leistungsregelung in Abhängigkeit von den am Generator 10 anliegenden Parametern erfolgt.

Wie bereits erwähnt, ist der Hydraulikkreislauf mit dem Gleichgangzylinder 4 und der Hydromaschine 6 als geschlossener Kreislauf ausgeführt.

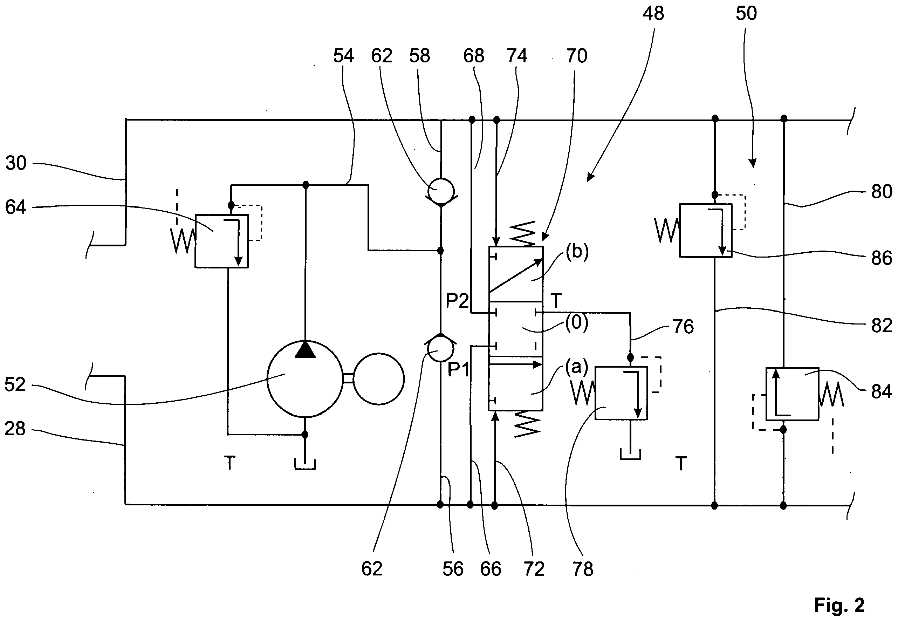

Über den Regelkreis 8 soll in Abhängigkeit vom Wellenklima der Kolben 22 des Gleichgangzylinders 4 mit einer Kraft F beaufschlagt werden, deren Verlauf ähnlich unregelmäßig wie der Verlauf der Kraft F_{W} gemäß Figur 2 ist. Diese Kraft F_{W} wird in Abhängigkeit vom Wellenklima, d.h. in Abhängigkeit von dem abgespeicherten F-t-Verlauf berechnet und dann als Sollgröße im Regelkreis 8 verarbeitet. Wie in Figur 1 angedeutet, kann diese Sollgröße F auch aus der über einen geeigneten Aufnehmer ermittelten Bewegungsgeschwindigkeit v des Kolbens 22 und einem Dämpfungsparameter beta berechnet werden, wobei dann F = xₚ. In diesem Fall ist beta ebenfalls in Abhängigkeit vom Wellenklima (Figur 2) in einem Datenspeicher einer in Figur 1 nicht dargestellten elektronischen Steuereinheit des Wandlers 1 abgelegt. In die Berechnung der Soll-Kraft geht des Weiteren noch die Drehzahl rpm des Antriebsstrangs 32 oder genauer gesagt der Schwungmasse 42 ein. Das Ergebnis der vorgenannten Berechnung ist dann wiederum die Soll-Kraft F.

Beim dargestellten Ausführungsbeispiel wird der sich in den Ringräumen 24, 26 einstellende Druck über Druckaufnehmer 37, 39 erfasst und die entsprechenden Drücke p_{A} und p_{B} als Ist-Größen der als Kraftregler ausgeführten Regeleinheit zugeführt, der beispielsweise als p-Regler ausgeführt ist. In der Regeleinheit 46 wird aus den erfassten Drücken und den Wirkflächen des Kolbens 22 die Ist-Kraft F_{IST} berechnet und mit der Soll-Kraft F verglichen, wobei über die Regeleinheit auch der Soll-Leistungswert am Generator 10 mit dem Ist-Leistungswert verglichen und bei einer Abweichung ein Ausgangssignal an die Hydromaschinen 6, 42 und den Frequenzumrichter 42 abgegeben, so dass deren Schwenkwinkel alpha und die Drehzahl rpm verstellt wird. Die Verstellung erfolgt so lange bis die auf den Kolben 22 wirksame Kraft gleich der Sollkraft F ist und die Schwungmasse 42 mit der Solldrehzahl dreht. Die Kraft ist in Abhängigkeit vom Wellenklima so gewählt, dass eine optimale Umsetzung der kinetischen Wellenenergie in hydraulische Energie erfolgt, so dass der Wirkungsgrad der Anlage bei minimalem vorrichtungstechnischem Aufwand optimiert ist.

Bei Erreichen eines der beiden Totpunkte des Kolbens 22 wird über die Regeleinheit der Schwenkwinkel alpha der Hydromaschinen 6, 42 über 0 verstellt, so dass bei der Umkehrung der Bewegungsrichtung des Kolbens 22 die Drehrichtung der Hydromaschinen 6, 42 unverändert bleibt. Durch dieses Über-Null-Verstellen kann auf einen hydraulischen oder elektronischen Gleichrichter verzichtet werden, so dass der Aufbau weiter vereinfacht ist.

Die Einstellung der Schwenkwinkel alpha der beiden über Null verschwenkbaren Hydromaschinen 6, 44 erfolgt in Abhängigkeit von einem einzigen Ausgangssignal der Regeleinheit 46, über das Stellgeräte zur Verstellung der Schwenkwinkel der beiden Hydromaschinen 6, 44 synchron angesteuert werden. Dieses Steuersignal wird über eine Signalleitung 48 an die beiden Stellgeräte zur elektrohydraulischen Verstellung des Schwenkwinkels angelegt. Derartige Stellgeräte werden von der Anmelderin unter der Produktbezeichnung HS4 vertrieben, so dass hinsichtlich der Funktion auf die diesbezüglichen Ausführungen unter www.boschrexroth.de verwiesen werden kann.

Bei dem in Figur 1 dargestellten Wandler ist zum Austausch des Druckmittels, zur Vermeidung von Kavitationen und zum Ausgleich von Leckageverlusten eine Speisespüleinheit 48 vorgesehen. Des Weiteren ist die Betriebssicherheit des Wandlers durch eine Druckabsicherung 50 verbessert.

Der konkrete Aufbau der Speisespüleinheit 48 und der Druckabsicherung 50 wird anhand Figur 2 erläutert. Diese zeigt die beiden Einheiten 48, 50 in vergrößerter Darstellung. Beim Betrieb des Wandlers 1 wechseln aufgrund der oszillierenden Bewegung des Schwimmkörpers 2 die Hochdruck- und die Niederdruckseite in den Druckleitungen 28, 30 ständig und mit vergleichsweise hoher Frequenz. Bei ungünstigen Bedingungen kann es dabei vorkommen, dass niederdruckseitig Kavitationen auftreten. Diese Kavitationen können durch die Speisespüleinheit 48 verhindert werden. Der Grundaufbau einer derartigen Speisespüleinheit 48 ist bereits beispielsweise in der DE 10 2005 051 324 A1 oder in der nachveröffentlichten DE 10 2007 018 600 beschrieben, so dass hier nur die zum Verständnis der erforderlichen Bauelemente beschrieben werden.

Die Speisespüleinheit 48 hat eine als Konstantpumpe ausgeführte Speisepumpe 52, deren Druckanschluss über eine sich verzweigende Druckleitung 54 mit den Druckleitungen 28, 30 verbunden ist. In den beiden mit den Druckleitungen 28 und 30 verbundenen Zweigen 56, 58 ist jeweils ein in Richtung zur jeweiligen Druckleitung 28 bzw. 30 öffnendes Rückschlagventil 60 bzw. 62 vorgesehen. Über diese Speisepumpe 52 kann bei Druckabfall in einer der Druckleitungen 28, 30 Druckmittel aus einem Tank T in die jeweilige Niederdruckseite gefördert werden. Diese Speisepumpe 52 dreht mit konstanter Drehzahl, wobei der Maximaldruck durch ein Speisedruckbegrenzungsventil 64 begrenzt ist, so dass bei Überschreiten des an diesem eingestellten Drucks die Konstantpumpe 52 im Umlauf fördert.

Parallel zu den beiden Zweigen 56, 58 führen von den Druckleitungen 28, 30 zwei Spülleitungen 66, 68 weg, die zu Eingangsanschlüssen P1, P2 eines Spülventils 70 geführt sind. Dieses ist bei der dargestellten Ausführung als 3-Wege-Schaltventil ausgeführt, das in seiner Feder vorgespannten Grundposition (0) die Verbindung von den beiden Eingangsanschlüsse P1, P2 zu einem Tankanschluss T absperrt. Die Betätigung des Spülventils 70 erfolgt über jeweils eine an die Druckleitung 28 bzw. 30 angeschlossene Spülsteuerleitung 72 bzw. 74. Der in der Spülsteuerleitung 72 wirkende Steuerdruck beaufschlagt das Spülventil 70 in Richtung einer Schaltstellung (a), in der der Eingangsanschluss P2 mit dem Tankanschluss T verbunden ist und der weitere Eingangsanschluss P1 abgesperrt ist. Der Druck in der Spülsteuerleitung 74 beaufschlagt entsprechend einen Ventilschieber des Spülventils 70 in Richtung einer Schaltstellung (b), in der dann der Druckanschluss P2 abgesperrt und der Druckanschluss P1 mit dem Tankanschluss T verbunden ist. Letzterer ist über eine Tankleitung 76 und ein darin angeordnetes Druckbegrenzungsventil 78 mit dem Tank T verbunden. Das Druckbegrenzungsventil 78 ist so eingestellt, dass bei Überschreiten eines bestimmten Druckes in der Tankleitung 76 bei umgeschaltetem (Schaltstellungen (a), (b)) Spülventil 70 ein geringer Druckmittelvolumenstrom zum Tank T abströmen kann, der jedoch über die Speisepumpe 52 sofort ersetzt wird, so dass keinerlei Druckmittelverluste auftreten. Dadurch wird das Druckmittel im Druckmittelkreislauf kontinuierlich ausgetauscht, so dass eine Erwärmung des Druckmittels und damit ein Absinken des Wirkungsgrades des Wandlers verhindert werden kann.

Zur Absicherung der Druckleitungen 28, 30 ist die Druckabsicherung 50 vorgesehen. Diese hat gemäß der Darstellung in Figur 6 zwei parallel geschaltete, die beiden Druckleitungen 28, 30 verbindenden Entlastungsleitungen 80, 82, in denen jeweils ein als Druckbegrenzungsventil ausgeführtes Druckabsicherungsventil 84, 86 angeordnet ist, wobei das Druckabsicherungsventil 86 den Druck in der Druckleitung 30 und das Druckabsicherungsventil 84 entsprechend den Druck in der Druckleitung 28 begrenzt und bei Überschreiten dieses Maximaldrucks eine Druckmittelverbindung zur jeweils anderen Druckleitung aufsteuert.

Bei dem in Figur 1 dargestellten Ausführungsbeispiel werden zwei vergleichsweise kleine Hydromaschinen 6, 44 mit unterschiedlichem Schluck- / Fördervolumen verwendet. Dabei können beispielsweise über 0 verschwenkbare Axialkolbenmaschinen verwendet werden, wie sie beispielsweise von der Anmelderin unter der Typenbezeichnung A4V vertrieben werden.

Prinzipiell können diese beiden Hydromaschinen 6, 44 synchron angesteuert werden. Erfindungsgemäß wird es jedoch bevorzugt, wenn diese unabhängig voneinander angesteuert werden.

Von der Regeleinheit 46 wird - wie eingangs beschrieben - in Abhängigkeit von den Drücken in den Druckräumen des Gleichgangzylinders 4, vom Weg x des Schwimmkörpers 2 oder des Kolbens 22, von dessen Verfahrgeschwindigkeit xₚ oder dessen Beschleunigung xₚₚ und von der Drehzahl rpm jeweils ein dem einzustellenden Schwenkwinkel entsprechendes Ausgangssignal erzeugt, das jeweils über eine Signalleitung 47 bzw. 88 zu dem jeweiligen den Hydromaschinen 6, 44 zugeordneten Stellgerät (HS4) geführt ist. D.h. über die Regeleinheit 46 wird ein jeweils einer Hydromaschine 6, 44 zugeordnetes Schwenkwinkelsignal alpha 1, alpha 2 generiert. Gemäß einer Regelstrategie ist es dabei vorgesehen, dass zunächst die zweite Hydromaschine 44 auf Null verschwenkt ist und der Gleichgangzylinder 4 lediglich über die Kraft geregelte Hydromaschine 6 mit einer vorbestimmten, von den Wellencharakteristika abhängigen Kraft beaufschlagt ist. Sobald die Hydromaschine 6 voll ausgeschwenkt ist und der durch die Bewegung des Gleichgangzylinders 4 generierte Druckmittelvolumenstrom und die einzuregelnde Kraft weiter ansteigen, wird auch zusätzlich die zweite Hydromaschine 44 angesteuert. Prinzipiell ist es jedoch nicht erforderlich, die beiden Hydromaschinen 6, 44 mit einer derartigen Kaskadensteuerung anzusteuern, sondern das Ansteuern eines oder beider Hydromaschinen 6, 44 kann auch in Abhängigkeit anderer Betriebsparameter unterschiedlich oder synchron erfolgen.

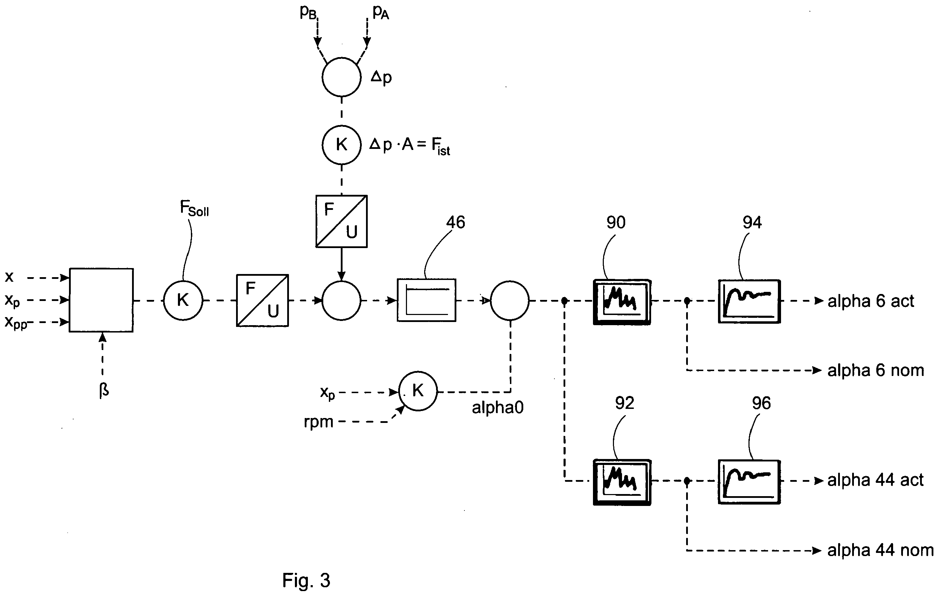

Figur 3 zeigt den Regelkreis des mechanisch/hydraulischen Teils des in Figur 1 dargestellten Wandlers, wobei diese Regelung als offener Regelkreis ausgeführt ist.

Gemäß Figur 3 wird zunächst in Abhängigkeit von den Bewegungsparametern x, xp, xpp sowie dem das Wellenklima wiedergebenden Kennwert beta eine auf den Gleichgangzylinder 4 wirkende Sollkraft F_{SOLL} bestimmt und ein entsprechendes Spannungssignal erzeugt. Über die beiden Druckaufnehmer 37, 39 werden die Drücke pA und pB erfasst und aus der resultierenden Druckdifferenz und der wirksamen Kolbenfläche A die wirkende hydraulische Kraft F_{IST} berechnet. Die Differenz zwischen der Sollkraft F_{SOLL} und der Ist-Kraft F_{IST} wird dann der Regeleinheit 46 zugeführt, die beispielsweise als P-Regler ausgeführt ist. In Abhängigkeit von dem Vergleich der Ist-Kraft F_{IST} und der Soll-Kraft F_{SOLL} wird dann von der Regeleinheit 46 ein Ausgangssignal abgegeben. Bei der Regelstrategie gemäß Figur 3 wird jedoch nicht - wie bei bekannten Lösungen - dieses Ausgangssignal direkt in einen Schwenkwinkel zur Verstellung der zugeordneten Hydromaschine umgesetzt, sondern es erfolgt eine Art Steuergrößeraufschaltung, wobei aus der Geschwindigkeit xp des Kolbens 22 und der Kolbenfläche das im Gleichgangzylinder 4 verschobene Druckmittelvolumen berechnet wird und dann zusätzlich noch in Abhängigkeit von der Drehzahl rpm der Schwungmasse 42 ein Schwenkwinkel alpha0 direkt berechnet wird, der theoretisch an der zugeordneten Hydromaschine eingestellt werden muss, um diese auf ein entsprechendes Schluckvolumen einzustellen. Dieser Wert alpha0 gibt dann die von der Geschwindigkeit xp und der Drehzahl rpm abhängige Grundeinstellung des Schwenkwinkels vor, die dann zur Einspannung des Gleichgangzylinders 4 durch den über die Regeleinheit generierten Wert korrigiert wird. D.h. der Pilot-Schwenkwinkel alpha0 wird dann entsprechend dem Ausgangssignal des Kraftreglers 40 verringert, um die Kraft F_{SOLL} und die Drehzahl rpm einzuregeln. Es zeigte sich, dass diese Störgrößenaufschaltung - auch Pilotregelung genannt - zu einem sehr stabilen Regelsystem führt, da über die Regeleinheit lediglich eine kleine, der einzuregelnden Kraft und Drehzahl entsprechende Schwenkwinkeldifferenz vorgegeben werden muss. Das über die Störgrößenaufschaltung erzeugte Signal wird dann noch mittels einer nicht linearen Adaption 90, 92 individuell für jede Hydromaschine 6, 44 angepasst. Das nach der Adaption, für jede Hydromaschine 6, 44 unterschiedlich vorliegende Steuersignal wird dann an das HS4-Schwenkwinkel-stellgerät 94, 96 der Hydromaschine 6 bzw. der Hydromaschine 44 angelegt und entsprechend der Schwenkwinkel alpha6act für die Hydromaschine 6 und der Schwenkwinkel alpha44act der Hydromaschine 44 eingestellt. Zur Optimierung der Regelung kann das an das jeweilige Stellgerät 94, 96 abgegebene Sollsignal alpha6nom bzw. alpha44nom erfasst und mit den tatsächlich eingestellten Schwenkwinkel verglichen und ggf. der Schwenkwinkel nachgeführt werden.

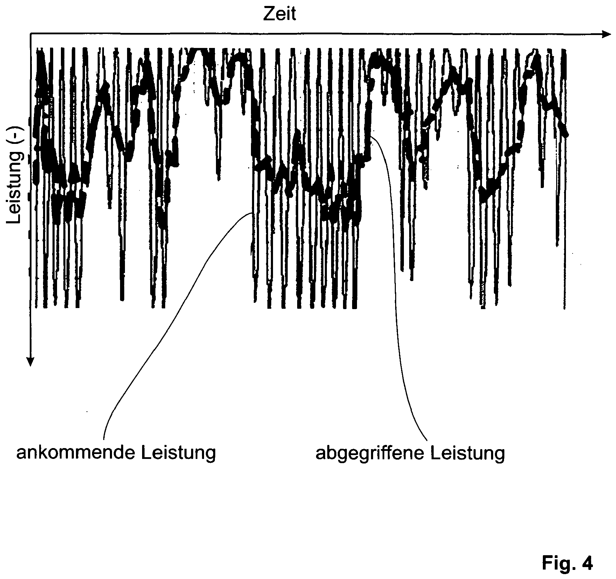

Es zeigte sich, dass sich mit einer Kraftregelung gemäß der vorbeschriebenen Regelstrategie in Abhängigkeit von der Drehzahl rpm ein sehr stabiles Hydrauliksystem einstellt, wobei der Wirkungsgrad des Wandlers bei Testversuchen höher als bei den Varianten gemäß den Figuren 1 und 4 liegt. Die Abweichungen zwischen den Schwenkwinkel-Sollwerten (alpha6/44nom) und den Schwenkwinkel-Istwerten (alpha6/44act) sind minimal, wobei der Wirkungsgrad bei einem in Kaskadenschaltung betriebenen System optimal ist. Die am Generator 10 abgreifbare Leistung ist dabei gegenüber herkömmlicher Systeme geglättet. Dies wird anhand Figur 4 erläutert.

In Figur 4 sind die am Antriebsstrang 32 ankommende hydraulische/mechanische Leistung (Drehmoment x Drehzahl) und die am Generator 10 abgegriffene elektrische Leistung (Strom x Spannung) dargestellt. Dabei gibt die dünnere, durchgezogene Linie die ankommende Leistung in Abhängigkeit von der Zeit und die dickere, gestrichelte Linie die abgegriffene, elektrische Leistung in Abhängigkeit von der Zeit wieder. Diese Leistungen sind - wie das Wellenklima - schwankend, jedoch gleichgerichtet, wobei die integrierte Energie jeweils aufgrund der optimierten Entwicklungsstrategie gegenüber herkömmlichen Lösungen sehr hoch ist. Man erkennt in dieser Darstellung die stark schwankende, am Antriebsstrang 32 ankommende mechanische Leistung (Drehmoment x Drehzahl). Demgegenüber verläuft die abgegriffene elektrische Leistung (Strom x Spannung) wesentlich gleichmäßiger mit verringerter Amplitude. In den Bereichen, in denen die durchgezogene Kurve (ankommende mechanische Leistung) einen größeren Ausschlag ins negative zeigt, wird die Schwungmasse 42 beschleunigt und somit Energie gespeichert. In den Bereichen, in denen die abgegriffene Leistung (gestrichelte Linie) sich mehr in den negativen Bereich als die ankommende Leistung (durchgezogene Linie) erstreckt, wird die Schwungmasse 42 verzögert und entsprechend der Generator 10 von der Schwungmasse angetrieben.

Prinzipiell kann auch eine der Hydromaschinen Kraft geregelt angesteuert werden, während die andere Hydromaschine drehmomentgeregelt ist. D.h. die letztgenannte Hydromaschine wird dann so verstellt, dass diese ein im Wesentlichen konstantes Drehmoment (unter Umständen auch abhängig von der Drehzahl) in den Antriebsstrang 32 einbringt. Den beiden Hydromaschinen 6, 44 können zum Druckausgleich noch Hydrospeicher zugeordnet werden - entsprechende Lösungen sind in den eingangs beschriebenen nachveröffentlichten Patentanmeldungen erläutert, so dass diesbezüglich auf die Voranmeldungen verwiesen wird, deren Inhalt zur Offenbarung der vorliegenden Patentanmeldungen zählt. Jeder Hydromaschine 6, 44 kann eine eigene Regeleinheit zugeordnet werden.

Die vorbeschriebene Regelstrategie ist prinzipiell bei allen Wandlern gemäß den nachveröffentlichten Voranmeldungen der Anmelderin einsetzbar. Bei Wandlern mit mehreren kleinen Hydromaschinen, können diese synchron oder unabhängig voneinander in Abhängigkeit von nahezu beliebigen Systemparametern angesteuert werden.

Offenbart ist ein Wandler mit einer von einer Naturkraft, beispielsweise Wellengang, mittelbar oder unmittelbar angetriebenen Pumpe, über die eine Hydromaschine antreibbar ist. Diese ist über einen Antriebsstrang mit einer elektrischen Maschine gekoppelt, die als Generator oder als Motor wirken kann. Erfindungsgemäß wird der Verstellwinkel der Hydromaschine in Abhängigkeit von Oszillationsparametern der Naturkraft über einen Regelkreis geregelt, wobei der Antriebsstrang durch Eingriff in die Steuerung der elektrischen Maschine abgebremst oder beschleunigt wird, um eine Glättung der abgegriffenen Leistung zu ermöglichen.

## Patentansprüche

1. Hydraulisch/elektrischer Wandler mit einer von einer oszillierenden Naturkraft angetriebenen Pumpe (4), über die eine Hydromaschinenanordnung (6, 44) antreibbar ist, die mit einer elektrischen Maschine (10) zur Umwandlung der hydraulischen Energie in elektrische Energie gekoppelt ist, wobei zumindest eine Hydromaschine (6, 44) der Hydromaschinenanordnung verstellbar ausgeführt ist und über einen Regelkreis (8) in Abhängigkeit von Bewegungsparametern der Pumpe (4) oder der Naturkraft ansteuerbar ist, wobei die Hydromaschinenanordnung (6, 44) und die elektrische Maschine (10) einem gemeinsamen Antriebsstrang (32) zugeordnet sind, **dadurch gekennzeichnet, dass** die elektrische Maschine (10) über eine Regeleinheit (46) derart ansteuerbar ist, dass der Antriebsstrang (32) in Abhängigkeit von Betriebsparametern der Pumpe (4) oder der Naturkraft abgebremst oder beschleunigt ist.

2. Wandler nach Patentanspruch 1, wobei im Antriebsstrang (32) eine Schwungmasse (42) vorgesehen ist.

3. Wandler nach Patentanspruch 2, wobei das Massenträgheitsmoment der Schwungmasse (42) ein Vielfaches des Massenträgheitsmoments der sonstigen rotierenden Massen des Antriebsstrangs (32) ist.

4. Wandler nach Patentanspruch 3, wobei das Massenträgheitsmoment der Schwungmasse (42) etwa das 10-fache des Massenträgheitsmoments der sonstigen Elemente des Antriebstrangs (32) beträgt.

5. Wandler nach einem der vorhergehenden Patentansprüche, wobei Verstellwinkel der Hydromaschinenanordnung (6, 44) in Abhängigkeit von der die Pumpe (4) beaufschlagenden Kraft oder von der Drehzahl der Schwungmasse (42) einstellbar ist.

6. Wandler nach einem der vorhergehenden Patentansprüche, wobei die Hydromaschinenanordnung zwei Hydromaschinen (6, 44) mit unterschiedlichen Nenngrößen hat.

7. Wandler nach einem der vorhergehenden Patentansprüche, wobei die elektrische Maschine (10) eine Asynchronmaschine ist, der ein Frequenzumrichter (35) zugeordnet ist.

8. Wandler nach Patentanspruch 7, wobei die Asynchronmaschine (10) leistungsgeregelt ist, wobei in den Leistungssollwert die Drehzahl und das an der Asynchronmaschine (10) anfallende Drehmoment oder die in den Antriebsstrang (32) eingeleitete mechanische Leistung eingehen.

9. Verfahren zum Wandeln von mechanischer Energie in elektrische Energie mittels eines Wandlers (1) mit einem von einer Naturkraft angetriebenen Pumpe (4), über die zumindest eine Hydromaschine (6, 44) angetrieben wird, die ihrerseits über einen Antriebsstrang (32) mit einer elektrischen Maschine (10) gekoppelt wird, **dadurch gekennzeichnet, dass** die elektrische Maschine (10) derart angesteuert wird, dass der Antriebsstrang (32) je nach Belastungszustand abgebremst oder beschleunigt wird, wobei bei der Ansteuerung der Hydromaschine (6, 44) ebenfalls die Verbindungsstrang-Drehzahl berücksichtigt wird.

10. Verfahren nach Patentanspruch 9, wobei die Ansteuerung der Hydromaschine (6, 44) derart erfolgt, dass die Pumpe (4) in Abhängigkeit von Bewegungsparametern der Naturkraft mit einem vorbestimmten Druck oder einer Kraft beaufschlagt wird (Kraftregelung).

11. Verfahren nach Patentanspruch 10, wobei im Antriebsstrang (32) eine Schwungmasse (42) angeordnet ist.

12. Verfahren nach einem der Patentansprüche 9 bis 11, wobei die elektrische Maschine (10) über einen Frequenzumrichter (35) mittelbar oder unmittelbar leistungs- oder drehzahlgeregelt wird.

## Claims

1. Hydraulic/electric converter having a pump (4) driven by an oscillating natural force, via which a hydraulic machine arrangement (6, 44) can be driven, which is coupled to an electric machine (10) for converting the hydraulic energy into electrical energy, at least one hydraulic machine (6, 44) of the hydraulic machine arrangement being designed to be adjustable and to be drivable via a control loop (8) on the basis of movement parameters of the pump (4) or the natural force, the hydraulic machine arrangement (6, 44) and the electric machine (10) being assigned to a common drive train (32), **characterized in that** the electric machine (10) is driven via a control unit (46) in such a way that the drive train (32) is braked or accelerated, depending on operating parameters of the pump (4) or of the natural force.

2. Converter according to Patent Claim 1, wherein a flywheel mass (42) is provided in the drive train (32).

3. Converter according to Patent Claim 2, wherein the mass moment of inertia of the flywheel mass (42) is a multiple of the mass moment of inertia of the other rotating masses of the drive train (32).

4. Converter according to Patent Claim 3, wherein the mass moment of inertia of the flywheel mass (42) is about 10 times the mass moment of inertia of the other elements of the drive train (32).

5. Converter according to one of the preceding Patent Claims, wherein displacement angles of the hydraulic machine arrangement (6, 44) are adjustable, depending on the force acting on the pump (4) or on the rotational speed of the flywheel mass (42).

6. Converter according to one of the preceding Patent Claims, wherein the hydraulic machine arrangement has two hydraulic machines (6, 44) with different rated sizes.

7. Converter according to one of the preceding Patent Claims, wherein the electric machine (10) is an asynchronous machine, to which a frequency converter (35) is assigned.

8. Converter according to Patent Claim 7, wherein the asynchronous machine (10) is power-controlled, wherein the rotational speed and the torque arising on the asynchronous machine (10) or the mechanical power introduced into the drive train (32) are incorporated in the power set point.

9. Method of converting mechanical energy into electrical energy by means of a converter (1) having a pump (4) driven by a natural force, via which at least one hydraulic machine (6, 44) is driven, which in turn is coupled via a drive train (32) to an electric machine (10), **characterized in that** the electric machine (10) is driven in such a way that the drive train, (32) is braked or accelerated, depending on the loading state, wherein the connecting train rotational speed is likewise taken into account when driving the hydraulic machine (6, 44).

10. Method according to Patent Claim 9, wherein the hydraulic machine (6, 44) is driven in such a way that a predetermined pressure or a force is applied to the pump (4), depending on movement parameters of the natural force (force regulation).

11. Method according to Patent Claim 10, wherein a flywheel mass (42) is arranged in the drive train (32).

12. Method according to one of Patent claims 9 to 11, wherein the electric machine (10) is power-controlled or speed-controlled, indirectly or directly, via a frequency converter (35).

## Revendications

1. Convertisseur hydraulique/électrique comprenant une pompe (4) entraînée par une force naturelle oscillante, par le biais de laquelle peut être entraîné un arrangement de machine hydraulique (6, 44), lequel est couplé à une machine électrique (10) en vue de convertir l'énergie hydraulique en énergie électrique, au moins une machine hydraulique (6, 44) de l'arrangement de machine hydraulique étant réalisée à cylindrée variable et pouvant être commandée par le biais d'un circuit de régulation (8) en fonction de paramètres de mouvement de la pompe (4) ou de la force naturelle, l'arrangement de machine hydraulique (6, 44) et la machine électrique (10) étant associées à une chaîne cinématique (32) commune, **caractérisé en ce que** la machine électrique (10) peut être commandée par le biais d'un circuit de régulation (8) de telle sorte que la chaîne cinématique (32) est freinée ou accélérée en fonction de paramètres de fonctionnement de la pompe (4) ou de la force naturelle.

2. Convertisseur selon la revendication 1, une masse oscillante (42) étant présente dans la chaîne cinématique (32).

3. Convertisseur selon la revendication 2, le moment d'inertie des masses de la masse oscillante (42) étant un multiple du moment d'inertie des masses des autres masses rotatives de la chaîne cinématique (32).

4. Convertisseur selon la revendication 3, le moment d'inertie des masses de la masse oscillante (42) étant environ égal à 10 fois le moment d'inertie des masses des autres éléments de la chaîne cinématique (32).

5. Convertisseur selon l'une des revendications précédentes, l'angle de positionnement de l'arrangement de machine hydraulique (6, 44) étant réglable en fonction de la force qui charge la pompe (4) ou de la vitesse de rotation de la masse oscillante (42).

6. Convertisseur selon l'une des revendications précédentes, l'arrangement de machine hydraulique comportant deux machines hydrauliques (6, 44) ayant des tailles nominales différentes.

7. Convertisseur selon l'une des revendications précédentes, la machine électrique (10) étant une machine asynchrone à laquelle est associé un variateur de fréquence (35).

8. Convertisseur selon la revendication 7, la machine asynchrone (10) étant régulée en puissance, la vitesse de rotation et le couple résultant au niveau de la machine asynchrone (10) ou la puissance mécanique introduite dans la chaîne cinématique (32) intervenant dans la puissance de consigne.

9. Procédé de conversion d'énergie mécanique en énergie électrique au moyen d'un convertisseur (1) comprenant une pompe (4) entraînée par une force naturelle, par le biais de laquelle est entraînée au moins une machine hydraulique (6, 44) qui, de son côté, est couplée à une machine électrique (10) par le biais d'une chaîne cinématique (10), **caractérisé en ce que** la machine électrique (10) est commandée de telle sorte que la chaîne cinématique (32) est freinée ou accélérée en fonction de l'état de charge, la vitesse de rotation de la chaîne de transmission étant également prise ne compte lors de la commande de la machine hydraulique (6, 44).

10. Procédé selon la revendication 9, la commande de la machine hydraulique (6, 44) étant effectuée de telle sorte que la pompe (4) est chargée avec une pression prédéfinie ou une force (régulation de force) en fonction de paramètres de mouvement de la force naturelle.

11. Procédé selon la revendication 10, une masse oscillante (42) étant disposée dans la chaîne cinématique (32).

12. Procédé selon l'une des revendications 9 à 11, la machine électrique (10) étant régulée en puissance ou en vitesse de rotation indirectement ou directement par le biais d'un variateur de fréquence (35).
